# EUROPÄISCHE PATENTANMELDUNG

(11) **EP 1 662 156 A1**
(43) Veröffentlichungstag der Anmeldung: **31.05.2006**
(21) Anmeldenummer: 05110012.1
(22) Anmeldetag: 26.10.2005
(51) Int. Cl.: F16B 13/06

(54) **Ankerelement**

(30) Priorität: 30.11.2004 DE 102004057710
(71) Anmelder: HILTI Aktiengesellschaft, 9494 Schaan (LI)
(72) Erfinder: Kunz, Jakob, 9470, Buchs (CH); Rosenkranz, Falk, 91052, Erlangen (DE); Gfeller, Balz, 2502, Biel (CH); Pichelin, Frédéric, 3044, Säriswil (CH); Lehmann, Mario, 2353, Les Pommerats (CH); Graf, René, 1400, Yverdon-les-Bains (CH)
(74) Vertreter: Wildi, Roland

(57) **Zusammenfassung**

Ein Ankerelement (11) weist ein Ankerteil (12), ein Hülsenteil (13) und ein Spreizteil (18) zur Aufweitung des Hülsenteils (13) auf. Das Hülsenteil (13) ist an dem Ankerteil (12) festgelegt und aus einem Thermoplast gefertigt.

## Beschreibung

### Technisches Gebiet

Die Erfindung betrifft ein Ankerelement, der im Oberbegriff des Patentanspruchs 1 genannten Art.

### Stand der Technik

Mittels eines in einem Bohrloch verankerten Ankerelements werden z. B. Installationen, beispielsweise im Elektro- oder Sanitärbereich, sowie Deckenabhängungen an Untergründen, wie z. B. Wände und Decken eines Bauwerks festgelegt. Beispielsweise werden Schraubanker für Befestigungen in mineralischen Untergründen, wie Beton oder Mauerwerk, in Form von gewindefurchenden Betonschrauben verwendet, die in ein zuvor erstelltes Bohrloch eingeschraubt werden. Bei organischen Untergründen, wie z. B. Holz, finden ebenfalls Schrauben Anwendung. Nachteilig an den bekannten Lösungen ist, dass das Setzen eines Schraubankers einen erheblichen Kraftaufwand erfordert und der umgebende Baustoff geschädigt wird. Um diese Nachteile zu vermeiden, sind so genannte Ankerelemente bekannt.

Einerseits kennt man beispielsweise aus der DE 41 16 149 A1 Ankerelemente in Form von Spreizdübeln, die ein Ankerteil mit einem Hülsenteil aufweisen. An dem Ankerteil ist ein Spreizteil ausgebildet, das unter Zugspannung das Hülsenteil aufweitet und somit eine Verklemmung oder eine Hinterschneidung im Bohrloch erzeugt.

Nachteilig an der bekannten Lösung ist, dass diese Ankerelemente die Lasten lokal, zumeist im Bereich des Bohrlochgrunds einleiten und dadurch in diesem Bereich hohe Spannungen entstehen, was bei geringen Rand- oder Achsabständen der Ankerelemente zu einer starken Tragfähigkeitsreduktion des gesetzten Ankerelements führt. Ausserdem verbleibt zwischen dem Ankerelement und der Bohrlochwandung ein Ringspalt, in welchen Wasser beziehungsweise Feuchtigkeit eindringen und Korrosion insbesondere an metallischen Ankerteilen verursachen kann.

Andererseits sind chemische Ankerelemente bekannt, wobei ein Ankerteil mit einem Verbundmörtel im Bohrloch befestigt wird. Beispielsweise wird der Verbundmörtel aus einem Applikationsgerät in das im Untergrund erstellte Bohrloch injiziert und anschliessend als Ankerteil z. B. eine Gewindestange eingesetzt. Weiter ist z. B. aus der DE 197 04 002 A1 ein Ankerteil zur Verankerung in einem Verbundmörtel bekannt, wobei der Verbundmörtel in einer Patrone beispielsweise aus Glas oder in einem Beutel aus Kunststoff eingeschlossen ist und in dieser Form mitsamt der Verpackung in das Bohrloch eingeführt wird. Mittels Dreh- und Schlagbewegungen wird das Ankerteil in das Bohrloch eingetrieben, wobei die Verpackung des Verbundmörtels zerstört und das Verbundmörtel-System durchmischt wird. Bei den chemischen Ankerelementen erfolgt eine über die ganze Länge der Bohrlochwandung verteilte Lasteinleitung.

Nachteilig an der bekannten Lösung ist, dass bis zur Aushärtung des Verbundmörtels, die in Abhängigkeit der vorhandenen Gegebenheiten, wie z. B. die Temperatur des Untergrundes oder der Umgebung, zwischen 1 h (Stunde) bis zu 24 h betragen kann, das Ankerelement nach dem Setzen nicht belastet werden kann. Zudem sind die Verbundmörtel einem Verfallsdatum unterworfen und nur bedingt lagerfähig. Des Weiteren muss der Verbundmörtel separat zu den Ankerteilen gelagert und gesetzt werden, wobei oftmals besondere Sicherheitsvorschriften zu beachten sind.

Aus der DE 102 16 897 A1 ist ein chemisch-mechanisches Ankerelement bekannt, das ein mittels eines Spreizteils aufweitbares Hülsenteil aufweist und zusätzlich mittels eines Verbundmörtels im Bohrloch verankert ist. Dieses Ankerelement ist sofort nach dem Setzen teil-belastbar. Nach dem Aushärten des Verbundmörtels erfolgt die Lasteinleitung über die gesamte Länge der Bohrlochwandung.

Nachteilig an dieser Lösung ist, dass der Verbundmörtel einem Verfallsdatum unterworfen und somit nur bedingt lagerfähig ist. Zudem muss auch bei diesem Ankerelement der Verbundmörtel separat zu den Ankerteilen gelagert und gesetzt werden, wobei oftmals besondere Sicherheitsvorschriften zu beachten sind.

Aus der DE 11 98 037 A1 ist ein Ankerelement mit einem stiftförmigen Befestigungsmittel zur Befestigung in einem Betonkörper bekannt. Zur Ausbildung einer Aussparung ist eine Metallhülse im Betonkörper bündig eingelassen, in die ein Hülsenteil aus Polyamid eingeschoben wird. Das stiftförmige Befestigungsmittel wird in das Hülsenteil eingetrieben, wobei überschüssiges Material des Hülsenteils verdrängt wird.

Nachteilig an dieser Lösung ist, dass eine auf dieses Ankerelement speziell abgestimmte Aussparung erstellt werden muss. Zudem müssen bei diesem Ankerelement das Hülsenteil sowie die Metallhülse separat zu den Ankerteilen gelagert und gesetzt werden. Da die erstellte Befestigung im Wesentlichen nur auf eine reibschlüssige Bindung zwischen dem Hülsenteil und der Metallhülse beziehungsweise zwischen dem Hülsenteil und dem Ankerteil beruht, lassen sich mit diesem Ankerelement nur geringe Lasten übertragen.

### Darstellung der Erfindung

Aufgabe der Erfindung ist es, ein Ankerelement zu schaffen, das die oben genannten Nachteile vermeidet und insbesondere einfach zu Setzen sowie nach dem Setzen sofort belastbar ist. Zudem soll die Lasteinleitung weitgehend gleichmässig über die Länge des Bohrlochs erfolgen.

Die Aufgabe ist durch die Merkmale des unabhängigen Anspruchs gelöst. Vorteilhafte Weiterbildungen sind in den Unteransprüchen dargelegt.

Gemäss der Erfindung ist das Hülsenteil an dem Ankerteil festgelegt und aus einem Thermoplast gefertigt.

Das Ankerteil aus einem steifen Material, wie z. B. Stahl, ist von dem Hülsenteil aus Thermoplast umhüllt, so dass das Ankerelement aus einem einzigen Hybridteil besteht und keine Teile des Ankerelements separat gelagert und gesetzt werden müssen. Des Weiteren ist das Ankerelement im Wesentlichen keinem Verfallsdatum unterworfen und somit lange sowie ohne Beachtung von besonderen Sicherheitsbestimmungen lagerfähig.

Die Montage des Ankerelements erfolgt drehend in einem Bohrloch, das einen kleineren Durchmesser als der Aussendurchmesser des Ankerelements beziehungsweise des Hülsenteils aufweist. Durch die entstehende Reibungswärme erwärmt sich der Thermoplast des Hülsenteils bis zu einem Erweichungs-, Schmelz- oder Abbauzustand des Materials, wobei überschüssiges Material des Hülsenteils verdrängt oder abgetragen wird, so dass sich das Hülsenteil ideal an die Ausgestaltung des Bohrlochs anpasst. Kleinste Hinterschnitte und Unebenheiten im Bohrloch können zur Ausbildung einer formschlüssigen Verankerung nach dem Erstarren des Hülsenteils ausgenutzt werden. Das Hülsenteil wird während des Montageprozesses zusätzlich radial deformiert und baut dadurch eine Spreizkraft auf. Zudem kann mit geeigneten Kunststoffen eine adhäsive Bindung des Hülsenteils mit der Bohrlochwandung geschaffen werden. Sofern die Adhäsion oder durch Schwindungsprozesse hervorgerufene Kräfte, die üblicherweise während und nach der Kunststoffverarbeitung auftreten, zwischen dem Ankerteil und dem Hülsenteil zur Übertragung von Drehmomenten ausreichen, erübrigt sich eine spezielle Ausbildung des Ankerteils oder die Anordnung von Drehmitnahmemittel zur Übertragung von Drehmomenten.

Das zumindest eine Spreizteil zur Aufweitung des Hülsenteils ist vorteilhaft am setzungsrichtungsseitigen Ende des Ankerteils angeordnet und derart ausgebildet, dass unter Zugbelastung das Hülsenteil aufgespreizt und somit das Ankerelement zusätzlich im Bohrloch verankert wird. Dabei wird die Wirkung der bereits beim Setzen erzeugten Spreizkraft zusätzlich unterstützt. Der zu der Längserstreckung beziehungsweise zu der Längsachse des Ankerteils gemessene Konuswinkel des Spreizteils liegt vorteilhafterweise im Bereich zwischen 5° und 40° und vorzugsweise im Bereich zwischen 10° und 20°. Mehrere Verankerungsanteile, insbesondere infolge der wirkenden Spreizkräfte und der Adhäsion, tragen einzeln oder in Kombination zu einer guten Lasteinleitung über das Ankerelement bei. In einer Variante sind mehrere Spreizteile hintereinander als Spreizkonen an dem Ankerteil angeordnet, so dass das Hülsenteil in mehreren Bereichen beim Aufbringen einer Zugbelastung auf das Ankerteil aufgeweitet wird.

Gegenüber konventionellen chemischen Ankerelementen kann mit dem erfindungsgemässen Ankerelement tropffrei auch bei Befestigungen im Deckenbereich, bei so genannten Überkopfmontagen, gearbeitet werden. Es ist ein erhöhter Arbeitsschutz ohne besondere Vorkehrungen gegeben und es kann sauber gearbeitet werden. Da kein Handling mit chemischen Substanzen erfolgt, sinkt nicht nur das Risiko von Verschmutzungen und daraus resultierenden Verfärbungen im Umgebungsbereich um das Bohrloch sondern auch die Gefahr von Fehlsetzungen wird reduziert. Des Weiteren müssen keine Auspressgeräte und Kartuschen für den Verbundmörtel entsorgt werden. Die Lasteinleitung erfolgt im Vergleich zu herkömmlichen Spreiz- oder Hülsenanker weitgehend homogen beziehungsweise ausserordentlich gleichmässig nahezu über die gesamte Verankerungslänge, so dass praktisch keine lokalen Spreizkräfte auftreten, was die Realisierung von geringen Achs- und Randabständen ermöglicht. Das erfindungsgemässe Ankerelement ist zudem sofort belastbar und es ist kein Spalt zwischen der Bohrlochwandung und dem Ankerteil vorhanden, durch den Wasser beziehungsweise Feuchtigkeit eindringen kann. Des Weiteren wurde mit dem erfindungsgemässen Ankerelement ein kostengünstig herstellbares Befestigungselement geschaffen, welches für eine ausreichende Verankerung geringere Setztiefen als bei den herkömmlichen Spreizdübeln beziehungsweise mechanischen Ankerelementen erfordert und auch in einem gerissenen Untergrund einsetzbar ist.

Vorzugsweise ist der Thermoplast faserverstärkt, womit die mechanischen Eigenschaften, insbesondere die Festigkeit des gefertigten Hülsenteils gegenüber einem Thermoplast ohne den Zusatz von Fasern verbessert werden. Beispielsweise werden Glasfasern oder Fasern aus Kevlar ® dem Thermoplast beigegeben. Insbesondere zur Verbesserung der Druckfestigkeiten des Thermoplasts kann dieser auch mineralisch gefüllt sein, z. B. mit einem Kalziumkarbonat. Der Gehalt der Beimischung in dem Thermoplast beträgt zwischen 10 Gew.-% und 50 Gew.-%, vorzugsweise zwischen 15 Gew.-% und 40 Gew.-%.

Bevorzugt ist der Thermoplast polar, womit beim Setzvorgang eine vorteilhafte adhäsive Wirkung insbesondere zwischen dem Hülsenteil und der Bohrlochwandung sowie zwischen dem Hülsenteil und dem Ankerteil aufgebaut wird. Ein Thermoplast der sich insbesondere durch vorteilhafte adhäsive Eigenschaften auszeichnet, ist beispielsweise Ethylenvinylacetat (EVA).

Vorzugsweise ist der Thermoplast ein Polyamid, das eine Schmelztemperatur aufweist, die auch im Brandfall eine Resttragfähigkeit gewährleistet. Zudem sind Polyamide beständig gegenüber alkalischen Medien, weisen eine gute Festigkeit auf und sind zäh, insbesondere kaltschlagzäh.

Weitere mögliche Thermoplaste sind beispielsweise Polyoxymethylen (POM), Polybutylenterephthalat (PBT), Polypropylen, Polyvinylchlorid, Acrylglas, Polytetrafluorethylen, Polycarbonat, Polyacetat, Hochdruck- oder Niederdruckpotyethylen, wobei diese Aufzählung nicht abschliessend ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand eines Ausführungsbeispieles näher erläutert. Es zeigen:
Fig. 1 Einen Schnitt durch ein erfindungsgemässes Ankerelement; und
Fig. 2 einen Schnitt des in Fig. 1 gezeigten Ankerelements im gesetzten Zustand.

Grundsätzlich sind in den Figuren gleiche Teile mit den gleichen Bezugszeichen versehen.

### Wege zur Ausführung der Erfindung

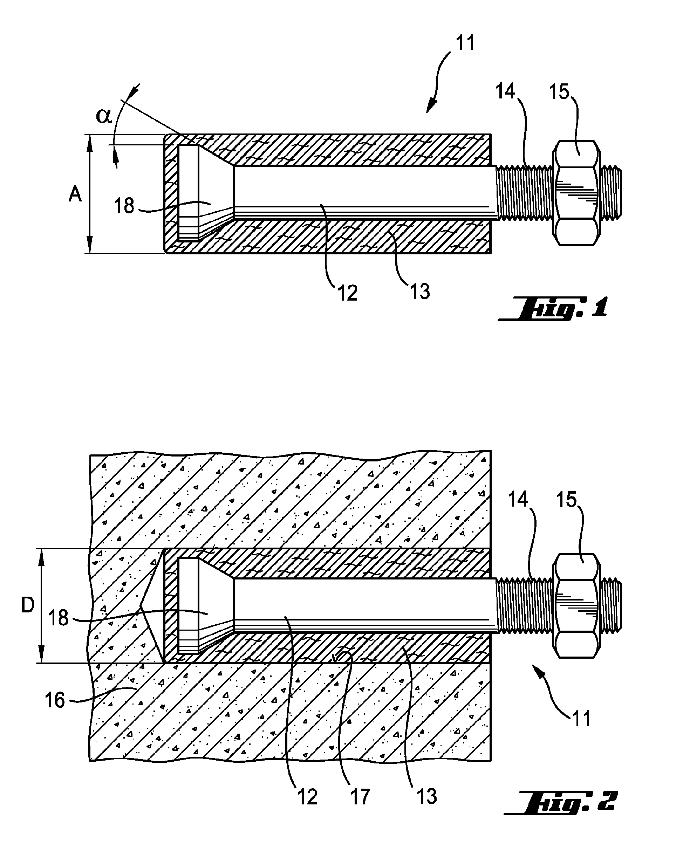

Das in den Figuren 1 und 2 dargestellte Ankerelement 11 weist ein Ankerteil 12 und ein an dem Ankerteil 12 festgelegtes Hülsenteil 13 auf, das aus einem Thermoplast, z. B. einem Polyamid gefertigt ist. Das Ankerteil 12 weist an einem, setzungsrichtungsseitig abgewandten Endbereich ein Lastangriffsmittel in Form eines Gewindes 14 auf, an dem ein Gegenstand z. B. mittels der Mutter 15 am Untergrund 16 festlegbar ist, wenn das Ankerelement 11 im Bohrloch 17 gesetzt ist. An dem gegenüberliegenden Ende ist ein konusförmiges Spreizteil 18 zur Aufweitung des Hülsenteils 13 an dem Ankerteil 12 ausgebildet. Der Konuswinkel α des Spreizteils 18 beträgt in diesem Ausführungsbeispiel 15°.

Der Aussendurchmesser A des Hülsenteils 13 ist grösser als der Durchmesser D des Bohrlochs 17 ausgebildet. Über das Gewinde 14 wird mit einer geeigneten, hier nicht dargestellten Vorrichtung das Ankerelement 11 drehend in das Bohrloch 17 eingetrieben.

Der Thermoplast ist mit Glasfasern verstärkt oder mineralisch gefüllt. Nachfolgend zwei Beispiele für ein mit Glasfasern verstärkten Thermoplast:

### Beispiel 1:

Das Hülsenteil ist aus einem Polyamid 6 (PA 6) mit 25 Gew.-% Glasfasern gefertigt.

### Beispiel 2:

Das Hülsenteil ist aus einem Polyamid 6.6 (PA 6.6) mit 40 Gew.-% Glasfasern gefertigt.

Nachfolgend ein Beispiel eines mineralisch gefüllten Thermoplasts:

### Beispiel 3:

Das Hülsenteil ist aus einem Polypropylen (PP) mit 20 Gew.-% Kalziumkarbonat gefertigt.

## Patentansprüche

1. Ankerelement mit einem Ankerteil (12), einem Hülsenteil (13) und einem Spreizteil (18) zur Aufweitung des Hülsenteils (13), **dadurch gekennzeichnet, dass** das Hülsenteil (13) an dem Ankerteil (12) festgelegt ist und aus einem Thermoplast gefertigt ist.

2. Ankerelement nach Anspruch 1, **dadurch gekennzeichnet, dass** der Thermoplast faserverstärkt ist.

3. Ankerelement nach Anspruch 1 oder 2, **dadurch gekennzeichnet, dass** der Thermoplast polar ist.

4. Ankerelement nach einem der Ansprüche 1 bis 3, **dadurch gekennzeichnet, dass** der Thermoplast ein Polyamid ist.
